# EUROPEAN PATENT APPLICATION

(11) **EP 2 947 908 A1**
(43) Date of publication of application: **25.11.2015**
(21) Application number: 14305761.0
(22) Date of filing: 23.05.2014
(51) Int. Cl.: H04W 24/02, H04W 36/04, H04W 84/02, H04W 84/04

(54) **Management method for use by a management system**

(71) Applicant: Alcatel Lucent, 92100 Boulogne-Billancourt (FR)
(72) Inventor: Gacanin, Haris, 2018 Antwerpen (BE)
(74) Representative: ALU Antw Patent Attorneys

(57) **Abstract**

A management system in a telecommunication environment comprising a femto access network and a wifi access network is described. The management system comprises
- a first collector adapted to collect femto layer performance monitoring data that comprises values for femto layer management parameters of the femto access network; and
- a second collector adapted to collect wifi access layer performance monitoring data that comprises values for wifi access layer management parameters of the wifi access network.

The management system further comprises an analytics diagnostic engine with decision logic for predefined normalized management parameters. Each one of the predefined normalized management parameters is defined in relation to at least one of the femto layer management parameters and at least one of the wifi access layer management parameters. The analytics diagnostic engine is adapted to receive the collected femto layer performance monitoring data and the wifi access layer performance monitoring data, and is further adapted to generate action signals for managing network elements of both, the femto access network and the wifi access network. (Figure 2).

## Description

### Field of the Invention

The present invention relates to a management method for use by a management system in a telecommunication environment. Such management system and method are already know in the art.

### Background

The explosive growth of home mobile data traffic has put significant load on the operator's home access infrastructures such as DSL, fiber and Wifi. Studies on wireless usage show that more than 50% of all voice calls and more than 70% of all data usages originate from subscriber's home. The quality of service and the quality of experience of the subscribers are the key criteria for the operators to hold on to their end customers and reduce churn.

Operators are introducing home eNodeBs (HeNBs) in the subscriber's home network to offer higher capacity and enable self-optimization at run time. The concept of Self Organizing Networks (SON) is becoming a crucial factor for any telecom operator to optimize the real-time performance of their networks. A self-organizing Network SON is an automation technology designed to make the planning, configuration, management, optimization and healing of mobile radio access networks simpler and faster. SON functionality and behavior has been defined and specified and is in generally accepted in mobile industry recommendations produced by organizations such as 3rd Generation Partnership Project 3GPP and the Next Generation Mobile Networks NGMN. In addition, the network operators started with offers to deploy home femtocells.

Indeed, operators have introduced E-UTRAN Node B, also known as Evolved Node B, abbreviated as eNodeB (as called here further on) and Home Node B, or HNB, or Femto Access Point FAP (as called here after).

An eNodeB is the element in E-UTRA of LTE which is the evolution of the element Node B in UTRA of UMTS. It is the hardware that is connected to the mobile phone network that communicates directly with mobile handsets (User Equipment). Traditionally, a Node B has minimum functionality, and is controlled by a Radio Network Controller RNC. However, with an eNodeB, there is no separate controller element which simplifies the architecture and allows lower response times.

In addition, a Femto Access Point is a 3G femtocell which performs many of the functions of a Node B, but which is optimized for deployment in the home. Such a Femto Access Point is typically coupled via a Routing Gateway, either integrated or not, in the home network to the Broadband Service Network.

ENodeB's are introduced in the macro cellular radio networks and Femto Access Points are introduced e.g. in the subscriber's home network in order to offload from the Radio Access Network data traffic. Hereby call drops and call handovers failures are reduced and a faster response time is generated.

In this evolved network architecture we distinguish two network layers :
1) Femto layer; and
2) 3G/4G LTE Radio Access Network (RAN) layer.

Femtocell Device Management Systems are existing in order to provide complete end-to-end service management including enriched customer experience. A femtocell management system, located in the operator's network, plays a critical role in the provisioning, activation and operational management of femtocells using industry standards such as TR-069 protocol family that is defined by Broadband Forum (BBF) and TR196 Femto Access Point capability defined by the Small Cell Forum.

Various standards bodies specify the use of the TR-069 family of standards as the base device management framework for femtocells. This protocol is widely used in DSL modem and residential gateway deployments, and uses a proven web-based architecture that can scale to support millions of devices. TR-069-based femtocell management systems are supporting efficient management of large numbers of femtocells and are providing self configuration, self optimization and self healing of the home network elements improving customer experience reducing churn, reducing unnecessary return of devices, reducing technician visit to fix a network element or device problem and enabling proactive care.

**The European patent application with application number** 13306338.8 and filing date 27 September, 2013 describes a management method for use by a management system wherein the provided focus is on both layers i.e. on the 3G/4G LTE RAN layer management directed to the eNodeBs with e.g. Self Organizing Networks and as well on the Femto Layer i.e. Access Points/Routing Gateways with e.g. a Femto Device Management System. The described management method integrates integrates home device management via TR-196 with radio access network RAN with respect to 3G and 4G networks. Such a management system supports operational functions such as service/device activation and firmware manipulation with access to the RAN layer and to the Femto layer and with advance mechanisms to deal with interference management, load balancing, admission control, etc.

In addition to the above two layers, in the home, there is already wireless access via IEEE 802.11 (wifi) technologies. Wi-Fi, also spelled Wifi or WiFi, is a technology that allows an electronic device to exchange data or connect to the internet wirelessly using 2.4 GHz UHF and 5 GHz SHF radio waves. The Wi-Fi Alliance defines Wi-Fi as any "wireless local area network (WLAN) products that are based on the Institute of Electrical and Electronics Engineers' (IEEE) 802.11 standards". However, since most modern WLANs are based on these standards, the term "Wi-Fi" is used in general English as a synonym for "WLAN". Only Wi-Fi products that complete Wi-Fi Alliance interoperability certification testing successfully use the "Wi-Fi CERTIFIED" trademark. Many devices can use Wi-Fi, e.g., personal computers, video-game consoles, smartphones, some digital cameras, tablet computers and digital audio players. These can connect to a network resource such as the Internet via a wireless network access point or also called hotspot. A Wi-Fi-enabled device can connect to the Internet when within range of a wireless network which is configured to permit this. The coverage of one or more interconnected access points can extend from an area as small as a few rooms to as large as many square kilometres. Coverage in the larger area may require a group of access points with overlapping coverage. Outdoor public Wi-Fi technology is used in wireless mesh networks. Wi-Fi provides service in private homes, businesses, as well as in public spaces at Wi-Fi hotspots set up either free-of-charge or commercially, often using a captive portal webpage for access. Routers that incorporate a digital subscriber line modem or a cable modem and a Wi-Fi access point, often set up in homes and other buildings, provide Internet access and internetworking to all devices connected to them, wirelessly or via cable. New protocols for quality-of-service make Wi-Fi more suitable for latency-sensitive applications (such as voice and video). Power saving mechanisms extend battery life. However, as the number of Femtocells are deployed in subscriber's homes, in public spaces and enterprises, a manual network deployment, Radio frequency planning and maintenance is not feasible and cost effective for operators. Moreover, the management of Wifi access and Femto access is done independently from each other.

A problem of the actual management systems is that coverage, capacity and energy efficiency of the overall home access such as Wifi and Femtocells are only complementing each other.

For home femtocell device management the specification is provided via TR-196 while the WiFi management is considered through TR-98 specification of Broadband Forum. Both of these specifications are used to manage their own networks with their own parameter specifications which are different from each other i.e. Femto Device Management Systems for femtocells and HomeView management for WiFi management.

### Summary

An object of the present invention is to provide a management method for use by a management system such as the above known types but wherein the provided focus is on both layers i.e. the Femto layer and the Wifi layer simultaneously.

According to the invention, this object is achieved due to the fact that the management method for use by the management system in a telecommunication environment that comprises a femto access network and a wifi access network comprises the steps of :
- collecting by a first collector femto layer performance monitoring data comprising values for femto layer management parameters of the femto access network; and
- collecting by a second collector wifi layer performance monitoring data comprising values for wifi access layer management parameters of the wifi access network; and
- predefining normalized management parameters, each one in relation to at least one of the femto layer management parameters and at least one of the wifi access layer management parameters; and
- predefining an analytics diagnostic engine with decision logic for the normalized management parameters, and
- applying both the collected femto layer performance monitoring data and wifi access layer performance monitoring data to the analytics diagnostic engine and thereby generating action signals for managing network elements in the femto access network and the wifi access network.

According to this invention relevant use cases such as e.g. load balancing in wifi, coordinated load balancing and energy efficiency, coordinated load balancing coverage optimization, can be applied to both networks.

The integrated femtocell deployments alongside the home Wifi access infrastructure becomes a plug-n-play operation with neighbor discovery, automatic cell identification selection, power adjustments, channel selections, and frequency assignments for automatic interference coordination and coverage optimization. Due to the integration of the remote management of the home access technologies Wifi and Femto, the usage of coverage between Femtocells and Wifi is extended with respect to the mobile wifi access network layer. The integration between the Wifi and Femto management systems is enabled by means of an integration layer which provides a parameter translation that normalizes the parameter inputs and outputs from both systems for integrated and joint evaluation and decision making.

Operators are hereby enabled to proactively manage and solve problems that usually cause interference between the different layers, to do more efficient load balancing and eventually to deliver a better quality of service and quality of experience for the end subscribers.

The advantage of the application is to provide remote and automated management of the home mobile and the wireless network. The diagnosis is performed in an automated fashion, without involving any human intervention and which brings significant savings for the operators.

In this way a management engine is developed for a multi-layer Femto/Wifi network troubleshooting and diagnostics. This is realized by defining the normalized management parameters in function of both i.e. the existing femto layer management parameters and the existing wifi access layer management parameters. Hereby the analytics diagnostic engine is enabled to discover and communicate the meaningful patterns in the collected data of both layers.

Another characteristic feature of the present invention is that the action signals being as such for managing the network elements of both i.e. the femto access network and the wifi access network in relation to each other. In this way a common goal on the level of both layers is realized by means of transmission of one or more of the generated action signals. Indeed, according to prior art, the independent known management servers are acting according to its own installed algorithms and are serving thereby its own defined goals. However, the different goals reflected in action signals being generated by the different management servers might have opposite effects on the network elements. By generating action signals for the network elements which are based upon the predefined normalized parameters taking as well femto layer management parameters as wifi access layer management parameters into account, a common defined goal of the analytics diagnostic engine is aimed and served whereby contradicting commands are avoided.

A further feature is that the action signals for the network elements of either or both the femto access network and the wifi access network, comprises anyone of configuration management signals, performance management signals and fault management signals.

Another feature of the system management method is that the method comprises storing the collected femto layer performance monitoring data and wifi access layer performance monitoring data at a storage platform before the respective step of applying the data to the diagnostic engine.

The system management method according to the present application further comprises that the normalized management parameters are anyone of a power requirement parameter, a High Speed Downlink Packet Access system description parameter or a system resource availability parameter. These examples of normalized management parameters are described in more details in the detailed description.

Furthermore the functional blocks of the management system i.e. the first collector, the second collector, the analytics diagnostic engine and the storage platform can be located centralized but can as well be located in a distributed way in the telecommunication network.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

### Brief Description of the Figures

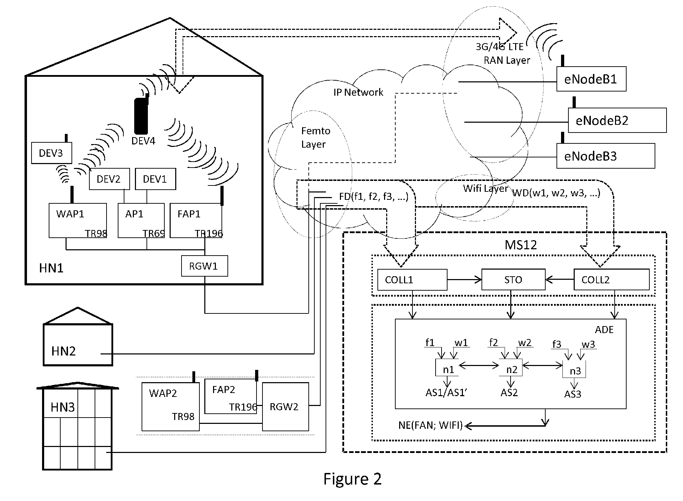

The working of the management system according to the present invention in accordance with its telecommunication environment that is shown in Figure 2 will be explained by means of a functional description of the different blocks shown therein. Based on this description, the practical implementation of the blocks will be obvious to a person skilled in the art and will therefore not be described in details. In addition, the principle working of the management method will be described in further detail.

Some embodiments of apparatus and/or methods in accordance with embodiments of the present invention are now described, by way of example only, and with reference to the accompanying drawings, in which:
Figure 1 provides an overview of an exemplary telecommunication environment according to prior art; and
Figure 2 provides an overview of an exemplary telecommunication environment in which the invention might be applied.

### Description of Embodiments

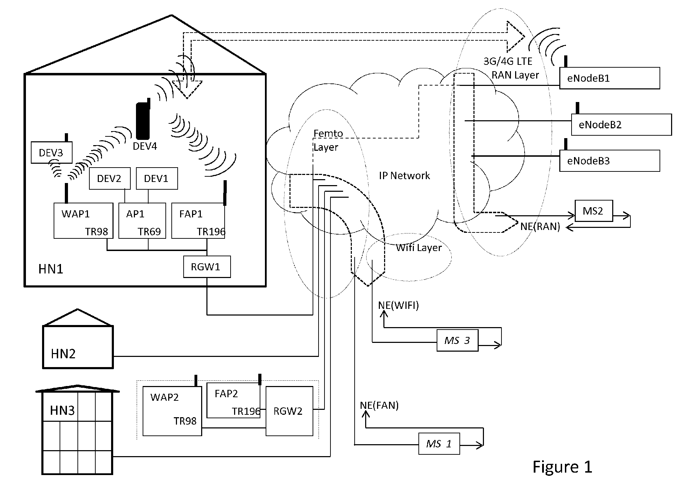

Referring to Figure 1 a telecommunication environment is shown. A list of the following network elements is described here below :
In a Radio Access Network RAN the 3G/4G LTE RAN Layer is shown which comprises :
   - Three Evolved NodeB's : eNodeB1, eNODEB2, eNodeB3 : each eNodeB's is adapted to communicate via a radio interface with mobile customer equipment such as e.g. DEV4 and to communicate with the Internet Protocol Network IP Network (shown in figures as a cloud).
   - One Management Server MS2 such as e.g. a Self Organizing Network SON which is also adapted to communicated with the IP Network. The Management Server MS2 is adapted to collect radio access layer performance monitoring data from the radio access network e.g. from the traffic regarding eNodeB1, eNodeB2, eNodeB3. This can for instance be realized by filtering from the traffic in the radio access the management signals or by executing measurements on the traffic in the radio access network.
Such a management system is enabled to make the planning, configuration, management, optimization and healing of the mobile radio access network RAN simpler and faster.

In a Femto Access Network FAN the Femto Layer is shown which comprises :
- Three Home Networks i.e. Home Locations HN1, HN2, HN3 :
   each Home Network is adapted to communicate with the IP Network over a wireline communication line via a Router Gateway. Figure 1 shows the Residential Gateway RGW1 in Home Network HN1; and
- One public Femto Access Point Femto FAP2 is shown which enables communication with the IP Network via Router Gateway RGW2. The Femto Access Point FAP2 supports the TR196 standard. It has to be remarked here that an Access Point e.g. FAP2 can physically be integrated into a Router Gateway RGW2 or not. This is shown in Figure 1 by the dashed line around both functional blocks.

In a Wifi Access Network WIFI the Wifi layer is shown which comprises
- One Access Point WAP1 in HN1 is providing access via a WiFi connection to the customer premises equipment Device 3 DEV3 such as e.g. a tablet personal computer. This Wifi Access Point WAP1 is supporting the TR98 standard. Also Device 4 DEV4 is Wifi-enabled whereby DEV4 can access the IP network when located in the environment of the Home Network HN1 via the Wifi Access point WAP1 and the Residential Gateway RGW1.
- One public Wifi Access Point WAP2 is shown which enables communication with the IP Network via Router Gateway RGW2. The Wifi Access Point WAP2 supports the TR196 standard. It has to be remarked here that the Access Point WAP2 can physically be integrated into the Router Gateway RGW2 or not. This is shown in Figure 1 by the dashed line around both functional blocks.

In order not to overload Figure 1, only one Home Network HN1 is shown and explained in further details. HN1 communicates with the IP Network via Router Gateway RGW1. Router Gateway RGW1 is coupled in the Home Network HN1 to 3 different kind of Access Points each one providing access to a respective kind of Customer Premises Equipment :
- Access Point WAP1 is providing access via a WiFi connection to the customer premises equipment - Device 3 - DEV3 such as e.g. a tablet personal computer. This Wifi Access Point WAP1 is supporting the TR98 standard. Also Device 4 DEV4 is Wifi-enabled whereby DEV4 can access the IP network when located in the environment of the Home Network HN1 via the Wifi Access point WAP1 and the Residential Gateway RGW1.
- Access Point AP1 is providing access over a wireline to the customer premise equipment DEV1 and DEV2 e.g. respective a personal computer and a Television. This Access Point AP1 is supporting the TR069 protocol.
- The 3^{rd} access point is a Femto Access Point FAP1 which is providing access over a Radio Interface to the customer equipment DEV4 i.e. a mobile radio handset. This Femto Access Point FAP1 is supporting the TR196 standard protocol. A Femto Access Point is providing offload for the traffic over the Radio access Network.

The global traffic coming from the different kinds of access points in the Home network HN1 is aggregated by the Router Gateway RGW1 and fetched towards the IP network.

The other Home Networks, HN2 and HN3 are implemented in similar ways with at least one of the above mentioned kind of Access Points and a router gateway.

A TR-069-based management system is shown which supports the TR-069-based family protocols such as TR-069, TR98 and TR196. This Broadband traffic includes as well the off-loaded traffic of the Radio Access Devices such as from DEV4, as the traffic of the home network devices via its wireline interface such as from DEV1 and DEV2, and also the traffic from the Wifi-enabled devices DEV3 and DEV4.

The telecommunication environment comprises a Femto Device Management System i.e. Management Server MS1 which is adapted to communicate with the IP Network. The Management Server MS1 is adapted to collect monitoring data of the femto layer performance monitoring data from the femto access network e.g. from the traffic regarding HN1, HN2, HN3 and RGW2. This can for instance be realized by filtering out the management signals from the traffic e.g. from DEV4 in the femto access or by executing measurements on the traffic in the femto access network. Such a management system as MS1 is enabled to provide self-configuration, self-optimization and self healing of the home network elements in order to e.g. improve the customer experience.

The telecommunication environment comprises a Wifi Device Management System i.e. Management Server MS3 which is adapted to communicate with the IP Network. The Management Server MS3 is adapted to collect monitoring data of the Wifi layer performance monitoring data from the Wifi access network e.g. from the traffic regarding HN1, HN2, HN3 and RGW2. This can for instance be realized by filtering out the management signals from the traffic e.g. from DEV3 in the Wifi access or by executing measurements on the traffic in the Wifi access network. Such a management system as MS3 is enabled to provide self-configuration, self-optimization and self healing of the home network elements in order to e.g. improve the customer experience.

In this Prior Art Figure 1 each of the Management Systems MS1, MS2 and MS3 in its respective Femto Layer, WIFI layer and 3G/4G LTE Radio Access Layer are generating action signals towards its respective network elements.

The Femto Access Layer network elements are e.g. NE(FAN) : In the Home Network HN1 via RGW1 : FAP1 and DEV4 and similar network elements in HN2 and HN3; and via RGW2 : FAP2.

The Wifi Acces Layer network elements are e.g. NE(WIFI) : in the Home Network HN1 via RGW1 : WAP1, DEV3 and DEV4 and similar network elemens in HN2 and HN3; and via RGW2 : WAP2.

The Radio Access Layer Network elements are e.g. NE(RAN) : ENodeB1 and DEV4, eNodeB2, eNodeB3.

In Figure 1 it is shown that MS1 is providing action signals towards its network elements NE(FAN) and that MS3 is providing action signals towards its network elements NE(WIFI).

As explained above, a problem of such independent management systems is that they do not serve a common goal.

Referring to Figure 2 an overview of an exemplary telecommunication environment in which the invention might be applied is shown.

It is referred to the description of Figure 1 for the explanation of the similar functional blocks namely :
- The Radio access Network RAN with its Radio Access Layer an its network elements eNodeB1 with DEV4, eNodeB2 and eNodeB3; and
- The Femto Access Network with its Femto Access Layer an its network elements in the Home Network HN1 : RGW1, FAP1 with DEV4 and the similar network elements in Home Networks HN2 and HN3, and RGW2 with FAP2; and
- The Wifi Access Network with its Wifi Access Layer an its network elements in the Home Network HN1 : RGW1, WAP1 with DEV3 and DEV4 (being Wifi enabled) and the similar network elements in Home Networks HN2 and HN3; and RGW2 with WAP2; and
- Wireline Acces point AP1 with DEV1 and DEV2 and the similar network elements in Home Networks HN2 and HN3.

It is to be noted that DEV4 belongs as well to the Radio Access Network as to the Femto Access Network as to the Wifi access network.

Furthermore in Figure 2, the Management System MS12 according to the present application is shown. MS12 is coupled to the IP network and comprises a first collector COLL1, a second collector COLL2, a storage platform STO and an analytics diagnostic engine ADE. The first and second collector COLL1 and COLL2 are both coupled to an input interface of the Management System and to analytics diagnostics engine ADE and to the storage platform STO. The storage platform STO is also coupled to the analytics diagnostics engine ADE. The analytics diagnostics engine ADE is coupled to an output interface of the Management System MS12.

The first collector COLL1 is configured to collect femto layer performance monitoring data FD that comprises values for femto layer management parameters FD(f1, f2, f3, ...) of the femto access network.

The second collector COLL2 is configured to collect wifi access layer performance monitoring data WD that comprises values for wifi access layer management parameters WD(w1, w2, w3, ...) of the wifi access network.

The analytics diagnostic engine ADE comprises decision logic for predefined normalized management parameters (n1, n2, n3, ...). Each one of the predefined normalized management parameters (n1, n2, n3, ...) is defined in relation to at least one of the femto layer management parameters e.g. f1 and at least one of the wifi access layer management parameters e.g. w1. The analytics diagnostic engine ADE is configured to receive the collected femto layer performance monitoring data FD and the wifi access layer performance monitoring data WD, and is further configured to process the data FD and WD in connection to each other due to the predefined normalized management parameters (n1, n2, n3, ...) and to thereby generate action signals (AS1, AS2, AS3, ...) for managing network elements NE(FAN;WIFI) of both the femto access network and the wifi access network. The generating of the action signals is shown for 3 actions signals AS1, AS2 and AS3 in Figure 2. In this way, a first value for a first femto layer management parameter f1 and a first value for a first wifi access layer management parameter w1 are both provided to a first processing block. This processing block processes the values in relation to each other by means of the predefined normalized management parameter n1 which is defined in relation to the two parameters f1 and w1. An action signal AS1 is generated and might for instance be provided towards FAP1.

Futhermore, it has to be clear that the generated action signals (AS1, AS2, AS3, ...) are managing the network elements NE(FAN;WIFI) of both the femto access network and the wifi access network in relation to each other. This means that in order to serve an identical goal in both kind of networks an action signal is generated for being further processed and executed in the femto layer e.g. AS1 and in parallel an identical action signals is generated for being further processed and executed in the WIFI layer e.g. AS1' (see Figure 2).

In addition it has to be understood that the management system MS12 according to the present application generates action signals which comprises anyone of configuration management signals, performance management signals and fault management signals for the network elements of FAN and of WIFI. This is described in some more details here below.

The management system might comprise also a storage platform STO adapted to store the collected femto layer performance monitoring data FD and the wifi access layer performance monitoring data WD. In this way a detailed monitoring platform with detailed monitoring policies can be defined whereby e.g. previously collected data can be used either alone or in combination with more recent collected data. More possible design details are provided here below.

Furthermore it has to be clear that the management system MS12 can be a centralized system (See Figure 2 - dashed lines for MS12) but might as well be designed according to a distributed way whereby e.g. the collection and storage of the data by COLL1, COLL2 and STO is performed by a physically other network element as the network element that comprises the analytics diagnostic engine ADE. This example is shown with the dotted lines for MS12 in Figure 2.

So, in addition to the conventional management of either the Femto layer or the WIFI layer the actual management system is improved to provide e.g. self configuration of the Femtocells such as FAP1 and DEV4 for its RAN interface with respect to WIFI configuration such as WAP1 and DEV4 for its Wifi interface.

Furthermore as a matter of design choice the management system might be built on a proven scalable femto device management platform for operation and maintenance functions and might be designed with a neutral technology and for instance compliant to TR 196 standards (Small Cell).

Such an integrated solution is using three distinct feature points :
i) data monitoring by means of collection and aggregation points This is shown in Figure 2 by means of COLL1 and COLL2 which might be either integrated in the management system MS12 or located in the network outside MS12.
ii) Management of all network elements in as well the femto layer as in the wifi access layer.
iii) Automated and policy driven action points by means of generation of action signals such as AS1, AS1', AS2 and AS3. These policies might be defined according to the operator's preferences.

Different steps which can be determined during design phase of the management system and during operational phase of the management system are described now here below.

[Step 1] An operator defines the desired the policies for the collection of the performance monitoring data (FD and WD) such as e.g. the sampling interval, the parameters to be collected (f1, f2, f3, ... and w1, w2, w3, ...), the network element for which these parameters need to be collected i.e. the collection target, the collection upload interval, ...

[Step 2] An operator defines fault and alarm monitoring conditions for the management system MS12 for in the event when these conditions are matching with the collected data from the network elements the system triggers a fault notification or an alarm notifications i.e. in order to ensure generation of an dedicated action signal.

[Step 3] An operator defines target objectives (input criteria) and corrective actions (output criteria) for the collected values of the parameters. For example: checking of predefined threshold values, definition and checking of value ranges and appropriated reactions in the event of match i.e. success versus no match i.e. failure which are comprised in the generation of the action signals.

[Step 4] Monitoring of the collected data starts once the automated monitoring policies and fault detection conditions are enabled in the management system MS12.

[Step 5] The management system MS12 transmits directives to dedicated network elements such as in the Femto Access Layer FAP1, FAP2, ... and its related devices, and in the Wifi Access Layer Network elements WAP1 and WAP, ...and its related devices in order to trigger when to start and stop monitoring respective collection targets (DEV3, DEV4, ...) which parameters need to be collected and how frequently to collect these parameters.

[Step 6] The monitored data is sent by the source network elements such as FAP1 and WAP1 (via RGW1) to a specified target upload server such as COLL1 and COLL2 in order to be directly processed by the analytics diagnostics engine ADE or alternatively in order to be stored at a storage platform STO for later processing by the ADE.

Another possible implementation is that the collected data is sent to a respective element management system such as a prior art Wifi Device Management system MS3 and/or prior art Femto Device Management system MS1. In such a situation it is the responsibility of these prior art management systems to forward the collected data towards the first and second collector COLL1 and COLL2 for the management system according to this application MS12.

[Step 7] Optimization algorithms are written and deployed for the data collection and aggregation points in order to better horizontal scalability and near real time responses.

[Step 8] In the event when predefined performance target objectives are met, no actions need to be taken i.e. no specific action signals are generated. In the event when the performance objectives are not met, corrective action signals are automatically generated and transmitted immediately towards the affected network elements or alternatively towards the operator in order to trigger eventual manual actions. The action signals are received at the network elements and are executed by its element manager. As a matter of example, the TR 69 protocol is used in order to ensure configuration of TR 196 Femto Access Point service object model parameters on the target Femtocell devices e.g. FAP1 and FAP2.

[Step 9] The management system MS12 monitors the health of the affected system by continuing to collect data and measuring the thresholds. In the event when the corrected actions fix the underlying problem and the system status is improving then the optimization procedure (one time session) ends.

[Step 10] In the event when the management system MS12 detects that the health of the system did not improved yet, even after executing the corrective actions, then the corrective actions are reversed by putting the system back to its previous state. This is achieved by generating action signals which are defining a rollback of functions and steps in order to get the system back to its pre corrective state.

[Step 11] In the event when the system reaches a stable state either after the corrective actions or either after a rollback action the monitoring and collection of data continues. Reports of optimization results can be produced for the operators in order to further tune the respective optimization algorithms and policies of data collection and configuration of control point.

So, network parameters are obtained from home networks for which a concept of virtual networks with femto access networks and wifi access networks which create a user network space are defined. More than one virtual network can be defined due to the fact that in the vicinity of a user home network there might be a number of virtual networks from other users such as e.g. an appartment building HN3 in Figure 2. The integration layer normalizes the parameters from both networks and translates them to common information for the common management layer. The common management layer decides to take actions based on pre-defined use case such as energy efficiency, capacity optimization and load balancing. The target is to maintain the user quality of service (QoS) while creating more efficient usage of network resources and keep the power consumption within a pre-defined level. Thus, the use cases (load balancing, energy efficiency and coverage optimization) should be coordinated in order to balance the load between the different virtual networks based on the requirement to keep the power savings at maximum as well as sufficient coverage. The target is to complement the coverage of femtocells with the coverage of wifi access and maximize the network resources. The overlapping between the two should be minimized as much as possible.

Moreover, the impact to other virtual networks is minimized as well. The coverage optimization from one user does not negatively affects the optimization in another virtual network. A method is generated to enable remote manipulation with available parameters at:
1) Femtocell
2) WiFi
3) Mobile device.

In order to decide which action to take and integrate the decision in both networks, the integrated layer decides to turnoff e.g. the femtocell FAP1 in the event when the conditions are met to move the user to WiFi Access network via WAP1.

The collected parameters are used to support the method with decisions regarding the number of active users that are present in the network, either femto or wifi, while devices are also classified according to their interfaces and access capabilities.

In this way two principles can be maintained :
1) QoS of the end user; and
2) Network efficiency from the network operator perspective

It has to be noted that the present management system and method are applicable to outdoor deployments as well as shown with WAP2 and FAP2 in Figure 2.

An examples which shows a possible relation and action signal between the predefined normalized management parameters and the existing femto layer and wifi layer management parameters is now described here below in detail.

### Example : Power-interference management

In TR-196 protocol the maximum transmit power (=f1) in Figure 2 named as e.g. f1, defines the maximum possible transmit power in dBm that a Femtocell can support in the Femto Layer.

In the WIFI layer a TransmitPower parameter is defined and herein called w1 in Figure 2 that defines the maximum available transmit power within a cell in the WIFI layer.

A normalized management parameter n1 is defined in relation to these two parameters f1 and w1 and reflects the power requirements for these overlaying cells. The values for f1 and w1 drive the decision logic in order to generate an output i.e. action signal AS1 and/or AS1'.

The normalized management parameter n1 might be defined as follows: n1 = f1 / w1. This new parameter n1 gives an indication how much influence a femtolayer cell has on a wifi layer cell or vice versa in the sense of required transmission power. For instance, depending on the coverage quality such as power level from Femto and Wifi, the decision logic decides to move users from one network to another and other way around.

This becomes more clear when considering a following example situation.

As described above, the DEV4 in the Home Network HN1 is enabled to communicate with the Internet via the following access points :
1) via the Radio Access Network i.e. via eNodeB1; or
2) via the Femto Access Network i.e. via FAP1 and RGW1; or
3) via the WIFI Access Network i.e. via WAP1 and RGW1.

Presume that DEV4 is actually communicating via the WIFI Access Network i.e. situation 3.

The device DEV3 in HN1 is only enabled to communicate via the WIFI Access Network i.e. via WAP1 and RGW1. Presume that DEV3 is indeed actually communicating.

As well DEV4 as DEV3 are using the WIFI Access Network via the Wireless Access Point WAP1. In the event when also additional devices in the Home Network HN1 are getting access to the Internet Network via the WIRFI Access Network, their might occur a coverage quality problem over the Wifi i.e. at WAP1-point.

The idea is that DEV4 will be automatically switched from the Wifi access network towards the Femto Access Network.

The method works as follows :
- collecting wifi layer performance monitoring data (WD) comprising values for wifi access layer management parameters (WD(w1, w2, w3, ...)) such as for instance a value for
   w1 = WIFI layer TransmitPower parameter that defines the maximum available transmit power within a cell in the WIFI layer of the HN1. This information is processed by the analytics diagnostic engine ADE whereby it is established that the wifi access layer encounters a coverage quality problem.
- collecting femto layer performance monitoring data (FD) comprising values for femto layer management parameters FD(f1, f2, f3, ...) of the femto access network such as for instance for
   f1 = MaxTx Power for network element FAP1 over the femto layer in the HN1. This information is processed by the analytics diagnostic engine ADE whereby it is established that the FEMTO access layer has actually no resource problem.

The calculated value for the new parameter n1 gives an indication of how much influence a femtolayer cell has on a wifi layer cell or vice versa in the sense of required transmission power. Based upon the lack of coverage quality in the Wifi access network and the knowledge of available resources in the Femto access network, the decision logic decides to move users from the wifi network to the Femto network. Based upon the collected information the decision logic selects DEV4 (and not DEV3 which is not Femto enabled) to switch from the Wifi access network towards the Femto access network.

A following method step is executed :
- generating two Action Signals AS1 and AS1' by MS12.

The action signal AS1 is transmitted over the Wifi layer i.e. the actually used layer by DEV4, towards DEV4. This Action signal AS deactivates at DEV4 the Wifi communication and activates at DEV4 the FAP1 communication and. The action signal AS4 is transmitted over the Femto access network towards FAP1 in order to support enabling of the communication of DEV4 via the Femto layer.

Once DEV4 does not communicates anymore via the Wifi access network, the quality of the coverage in the Wifi layer is reestablished.

The power in both access networks is managed by the results for n1.

By applying the collected femto layer performance monitoring data f1 and the collected wifi access layer performance monitoring data w1 to the analytics diagnostic engine ADE which comprises decision logic for the normalized management parameter n1, the action signals AS1 and AS1' are generated for forwarding towards the respective network elements whereby an identical goal is aimed through both access layers.

Furthermore, it has to be noted that in relation to the above mentioned European Patent Application with application number 13306338.8, the normalized management parameters (n1, n2, n3, ...) might be defined in relation to one of the femto layer management parameters, one of the wifi layer management parameters and in relation to one of the radio access layer management parameters. Hereby one overall management system and method overt the three different layers but however reflecting identical common goals is established.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A management method for use by a management system in a telecommunication environment comprising a femto access network (FAN) and a wifi access network (WIFI), said method comprises the steps of
- collecting femto layer performance monitoring data (FD) comprising values for femto layer management parameters (FD(f1, f2, f3, ...)) of said femto access network; and
- collecting wifi layer performance monitoring data (WD) comprising values for wifi access layer management parameters (WD(w1, w2, w3, ...)) of said wifi access network, **characterized in that** said method further comprises
- predefining normalized management parameters (n1, n2, n3, ...), each one in relation to at least one of said femto layer management parameters (f1) and at least one of said wifi access layer management parameters (w1); and
- predefining an analytics diagnostic engine (ADE) with decision logic for said normalized management parameters (n1, n2, n3, ...), and
- applying both said collected femto layer performance monitoring data (FD) and wifi access layer performance monitoring data (WD) to said analytics diagnostic engine and thereby generating action signals (AS1, AS2, AS3, ...) for managing network elements (NE(FAN;WIFI)) in said femto access network and said wifi access network.

2. The system management method according to claim 1, **characterized in that** said action signals (AS1, AS2, AS3, ...) for managing said network elements (NE(FAN;WIFI)) in said femto access network and said wifi access network being in relation to each other and thereby serving a common goal.

3. The system management method according to claim 1, **characterized in that** said action signals for said network elements comprises anyone of configuration management signals, performance management signals and fault management signals.

4. The system management method according to claim 1, **characterized in that** said method comprises storing said collected femto layer performance monitoring data (FD) and wifi layer performance monitoring data (WD) at a storage platform (STO) before said step of applying.

5. The system management method according to claim 1, **characterized in that** said normalized management parameters (n1, n2, n3, ...) being anyone of a power requirement parameter, a High Speed Downlink Packet Access system description parameter or a system resource availability parameter.

6. A management system (MS12) in a telecommunication environment comprising a femto access network and a wifi access network, said management system comprises
- a first collector (COLL1) adapted to collect femto layer performance monitoring data (FD) comprising values for femto layer management parameters (FD(f1, f2, f3, ...)) of said femto access network; and
- a second collector (COLL2) adapted to collect wifi access layer performance monitoring data (WD) comprising values for wifi access layer management parameters (WD(w1, w2, w3, ...)) of said wifi access network, **characterized in that** said management system further comprises
- an analytics diagnostic engine (ADE) with decision logic for predefined normalized management parameters (n1, n2, n3, ...), each one of said predefined normalized management parameters (n1, n2, n3, ...) being in relation to at least one of said femto layer management parameters (f1) and at least one of said wifi access layer management parameters (w1), said analytics diagnostic engine (ADE) being adapted to receive said collected femto layer performance monitoring data (FD) and said wifi access layer performance monitoring data (WD), and being adapted to generate action signals (AS1, AS2, AS3, ...) for managing network elements (NE(FAN;WIFI)) in said femto access network and said wifi access network.

7. The management system (MS12) according to claim 6, **characterized in that** said action signals (AS1, AS2, AS3, ...) being as such for managing said network elements (NE(FAN;WIFI) of both said femto access network and said wifi access network in relation to each other and serving thereby a common goal.

8. The management system (MS12) according to claim 6, **characterized in that** said action signals for said network elements comprises anyone of configuration management signals, performance management signals and fault management signals.

9. The management system (MS12) according to claim 6, **characterized in that** said management system further comprises a storage platform (STO) adapted to store said collected femto layer performance monitoring data (FD) and wifi access layer performance monitoring data (WD).

10. The management system (MS12) according to claim 6, **characterized in that** said normalized management parameters (n1, n2, n3, ...) being anyone of a power requirement parameter, a High Speed Downlink Packet Access system description parameter or a system resource availability parameter.

11. The management system (MS12) according to claim 6, **characterized in that** said first collector (COLL1), said second collector (COLL2), said analytics diagnostic engine (ADE) and said storage platform (STO) are located in a distributed way in the telecommunication network.
